# EUROPÄISCHE PATENTANMELDUNG

(11) **EP 4 184 402 A1**
(43) Veröffentlichungstag der Anmeldung: **24.05.2023**
(21) Anmeldenummer: 21209989.9
(22) Anmeldetag: 23.11.2021
(51) Int. Cl.: G06Q 10/10

(54) **RECHENSYSTEM, COMPUTERIMPLEMENTIERTES VERFAHREN, COMPUTERPROGRAMM UND COMPUTERLESBARES SPEICHERMEDIUM ZUR BEREITSTELLUNG EINER DIGITALEN KOOPERATIONSSCHNITTSTELLE ZWISCHEN EINEM AUTOR UND ABONNENTEN DES AUTORS ZUR ENTWICKLUNG EINES SCHRIFTSTÜCKES**

(71) Anmelder: Dinzinger, Marek, 93326 Abensberg-Offenstetten (DE)
(72) Erfinder: Dinzinger, Marek, 93326 Abensberg-Offenstetten (DE)
(74) Vertreter: Hannke, Christian

(57) **Zusammenfassung**

Es wird ein Rechensystem, ein computerimplementiertes Verfahren, ein Computerprogramm und ein computerlesbares Speichermedium zur Bereitstellung einer digitalen Kooperationsschnittstelle zwischen einem Autor und Abonnenten des Autors zur Entwicklung eines Schriftstückes zur Verfügung gestellt. Ein Prozessor des Rechensystems wird zumindest dazu veranlasst, Benutzeroberflächen an ein Autor-Endgerät und Abonnenten-Endgeräte bereitzustellen. Schriftstückabschnitte und Schriftstückfortsetzungsoptionen sind vom Autor-Endgerät empfangbar und an Abonnenten-Endgeräte sendbar. Folglich ist ein in der Abonnenten-Benutzeroberfläche ausgewählte Schriftstückfortsetzungsauswahl von dem Rechensystem empfangbar und eine Schriftstückfortsetzungsentscheidung, generiert durch eine Auswerteeinheit an das Autor-Endgerät sendbar. Weiterhin wird jeweils ein Zertifikat für den Empfang der jeweils ausgewählten Schriftstückfortsetzungsauswahl erzeugt und an das jeweilige Abonnenten-Endgerät gesendet.

## Beschreibung

Die Erfindung betrifft ein Rechensystem zur Bereitstellung einer digitalen Kooperationsschnittstelle zwischen einem Autor und Abonnenten des Autors zur Entwicklung eines Schriftstückes. Die Erfindung betrifft weiterhin ein computerimplementiertes Verfahren, ein Computerprogramm und ein computerlesbares Speichermedium zur Bereitstellung der digitalen Kooperationsschnittstelle.

Schriftsteller und Autoren von Schriftstücken sind abhängig von Verlagen, die die Schriftstücke produzieren und in den Handel bringen, beispielsweise als Printmedium oder als e-Book. Unbekannte Autoren stehen dabei zusätzlich vor der Herausforderung, zunächst ein Schriftstück fertig zu verfassen, einen Verlag zu finden und diesen von dem fertig verfassten Schriftstück zu überzeugen, bevor es der Öffentlichkeit zugänglich gemacht werden kann. Diese Hürde schreckt viele potenzielle Autoren davor ab, den Lebensunterhalt mit der Entwicklung von Schriftstücken zu verdienen. Ein weiterer Aspekt ist, dass bis zur finalen Veröffentlichung eines Schriftstückes mögliche Interessenten bis dato keinen Einfluss auf die Entwicklung des Schriftstückes nehmen können. Dabei gibt es durchaus das Bedürfnis von Interessenten, mit einem Schriftsteller während der Entwicklung eines Schriftstückes zu kooperieren. Ebenso sind auch Autoren daran interessiert, Interessenten bei der Entwicklung an einem Schriftstück teilhaben zu lassen und frühzeitig zu involvieren. Eine solche Kooperationsschnittstelle, mittels welcher Autoren und Interessenten, die den Autoren abonnieren können, gemeinsam ein Schriftstück entwickeln und ebenso beide Seiten von der gemeinsamen Entwicklung profitieren können, ist im Stand der Technik nicht existent.

Es ist daher die Aufgabe der vorliegenden Erfindung, mit technischen Mitteln eine Kooperationsschnittstelle zur Verfügung zu stellen, mittels welcher Autoren und Abonnenten des Autors gemeinsam ein Schriftstück entwickeln können, wobei auch die Abonnenten profitieren.

Diese Aufgabe wird gelöst durch ein Rechensystem mit den Merkmalen des Patentanspruches 1, ein computerimplementiertes Verfahren nach Patentanspruch 8, ein Computerprogramm nach Anspruch 14, sowie ein computerlesbares Speichermedium nach Anspruch 15. Vorteilhafte Ausführungsformen ergeben sich aus den Unteransprüchen.

Kerngedanke der Erfindung ist ein Rechensystem zur Bereitstellung einer digitalen Kooperationsschnittstelle zwischen einem Autor und Abonnenten des Autors zur Entwicklung eines Schriftstückes, das Rechensystem umfassend zumindest eine Netzwerkschnittstelle, eine Auswerteeinheit und ein Speichermedium, das mit zumindest einem Prozessor gekoppelt ist und prozessorausführbare Befehle speichert, die bei Ausführung durch den zumindest einen Prozessor den zumindest einen Prozessor zumindest zu den folgenden Schritten veranlasst:
a. Bereitstellen einer Autor-Benutzeroberfläche auf einem Autor-Endgerät, das über ein Netzwerk mit der Netzwerkschnittstelle verbunden ist;
b. Bereitstellen jeweils einer Abonnenten-Benutzeroberfläche auf Abonnenten-Endgeräten, die über das Netzwerk mit der Netzwerkschnittstelle verbunden sind;
c. Empfangen eines Schriftstückabschnittes und einer Mehrzahl an Schriftstückfortsetzungsoptionen von dem Autor-Endgerät und Speichern in dem Speichermedium;
d. Senden des Schriftstückabschnittes und der Mehrzahl an Schriftstückfortsetzungsoptionen an die Abonnenten-Endgeräte;
e. Empfangen jeweils einer Schriftstückfortsetzungsauswahl ausgewählt aus der Mehrzahl an Schriftstückfortsetzungsoptionen von den Abonnenten-Endgeräten;
f. Erzeugen jeweils eines Zertifikates für den Empfang der jeweils ausgewählten Schriftstückfortsetzungsauswahlen und Senden des jeweiligen Zertifikates an das jeweilige Abonnenten-Endgerät;
g. Generieren einer Schriftstückfortsetzungsentscheidung aus den empfangenen Schriftstückfortsetzungsauswahlen mittels der Auswerteeinheit und Senden der Schriftstückfortsetzungsentscheidung an das Autor-Endgerät.

Insbesondere ist die digitale Kooperationsschnittstelle eine Webseite und/oder ein Computerprogramm und/oder eine App. Grundsätzlich kann jedermann Autor werden, indem er sich bei der digitalen Kooperationsschnittstelle als Autor mittels eines Endgeräts registriert. Somit können eine Vielzahl an Autoren bei der digitalen Kooperationsschnittstelle registriert sein. Autoren können gleichermaßen auch Abonnenten eines anderen Autors sein. Abonnenten eines Autors kann jedermann sein. Um ein Abonnent eines Autors zu werden, ist es zunächst erforderlich, sich bei der digitalen Kooperationsschnittstelle als User mittels eines Endgeräts zu registrieren. In einem nächsten Schritt kann ein User, der sich für einen Autor, den er auf der digitalen Kooperationsschnittstelle findet, interessiert, diesen Autor mittels des Endgeräts abonnieren, indem er ein Abonnement auf den Autor abschließt. Der Abonnent eines Autors unterscheidet sich vom User zumindest dadurch, dass der Abonnent dazu berechtigt ist, eine Schriftstückfortsetzungsauswahl treffen zu können. Insbesondere kann ein User ein Abonnent mehrerer Autoren sein. Ein Endgerät kann insbesondere ein Smartphone, ein Tablet, ein PC oder dergleichen sein.

Darüber hinaus ist es insbesondere denkbar, dass der zumindest eine Prozessor dazu veranlasst wird, jeweils ein Zertifikat für jeweils einen Abschluss eines Abonnements des Abonnenten zu erzeugen und das jeweilige Zertifikat an das jeweilige Abonnenten-Endgerät zu senden.

Das Rechensystem umfasst zumindest eine Netzwerkschnittstelle, eine Auswerteeinheit, zumindest einen Prozessor und ein Speichermedium. Vorzugsweise ist das Rechensystem ein Server, wobei die Endgeräte den Clients in einer Server-Client-Architektur entsprechen.

Das Rechensystem ist über dessen Netzwerkschnittstelle mit einem Netzwerk verbunden. Das Netzwerk kann ein lokales Netzwerk, ein Weitverkehrsnetz und insbesondere das Internet sein.

Zunächst wird auf dem Endgerät des Autors, vorzugsweise initiiert durch eine Eingabe des Autors am Autor-Endgerät, eine Autor-Benutzeroberfläche durch das Rechensystem bereitgestellt. Die Autor-Benutzeroberfläche ist insbesondere ein Login-Bereich des Autors auf der Webseite, in der App oder in dem Computerprogramm. Auf der Autor-Benutzeroberfläche wird es dem Autor insbesondere ermöglicht, Schriftstückabschnitte und eine Mehrzahl an Schriftstückfortsetzungsoptionen einzufügen. Schriftstückabschnitte sind vorzugsweise ein oder mehrere Kapitel eines Schriftstückes, wobei das Schriftstück unvollständig ist bzw. noch einer Fortsetzung bedarf. Schriftstückfortsetzungsoptionen stellen demnach alternative Möglichkeiten über den weiteren Verlauf bzw. die weitere Handlung des Schriftstückabschnittes dar, die vom Autor vorgeschlagen werden.

Ebenso werden auf den jeweiligen Endgeräten der Abonnenten, vorzugsweise initiiert durch eine Eingabe des jeweiligen Abonnenten auf dem Abonnenten-Endgerät, eine Abonnenten-Benutzeroberfläche durch das Rechensystem bereitgestellt. Die Abonnenten-Benutzeroberfläche ist insbesondere ein Login-Bereich des Abonnenten auf der Webseite, in der App oder in dem Computerprogramm.

Vorzugsweise initiiert durch eine Eingabe des Autors auf dem Autor-Endgerät empfängt das Rechensystem einen Schriftstückabschnitt und die Mehrzahl an Schriftstückfortsetzungsoptionen, die innerhalb des Rechensystems weiterverarbeitet werden können. Der Schriftstückabschnitt und die Mehrzahl an Schriftstückabschnittsfortsetzungsoptionen werden im Speichermedium gespeichert, vorzugsweise in einem Datenspeicher des Speichermediums.

Ein Schriftstückabschnitt wird von Autor verfasst und entspricht beispielsweise einem Kapitel eines Buches. Die Schriftstückfortsetzungsoptionen werden ebenfalls vom Autor verfasst. Eine Schriftstückfortsetzungsoption entspricht einer Option für die Fortsetzung des Schriftstückabschnittes. Beispielsweise gibt der Autor also eine Mehrzahl an Optionen vor, wie das Kapitel des Buches fortgesetzt werden kann. Bevorzugt werden mindestens zwei, weiter bevorzugt genau zwei, besonders bevorzugt drei bzw. vier Schriftstückfortsetzungsoptionen erstellt.

Der empfangene Schriftstückabschnitt und die empfangenen Schriftstückfortsetzungsoptionen werden anschließend, initiiert durch eine Eingabe des jeweiligen Abonnenten, an das jeweilige Abonnenten-Endgerät gesendet.

Der jeweilige Abonnent kann dann den Schriftstückabschnitt und die Schriftstückfortsetzungsoptionen auf dem Abonnenten-Endgerät betrachten und eine Auswahl ausgewählt aus der Mehrzahl an Schriftstückfortsetzungsoptionen treffen, wie der Schriftstückabschnitt durch den Autor fortgesetzt werden soll. Initiiert durch eine Eingabe des Abonnenten empfängt das Rechensystem die jeweils durch einen der Abonnenten ausgewählte Schriftstückfortsetzungsauswahl vom jeweiligen Abonnenten-Endgerät. Es kann jeweils nur eine Auswahl je Abonnent empfangen werden.

In einem darauffolgenden Schritt erzeugt das Rechensystem ein Zertifikat. Das Zertifikat bescheinigt dem Abonnenten, dass eine Schriftstückfortsetzungsauswahl, gesendet vom jeweiligen Abonnenten-Endgerät, durch das Rechensystem empfangen wurde. Ein Zertifikat ist in diesem Zusammenhang eine fälschungssichere, nicht kopierbare, digitale Urkunde. Das jeweilig erzeugte Zertifikat wird anschließend an die jeweiligen Abonnenten-Endgeräte gesendet und vorzugsweise dort gespeichert werden. Das Zertifikat kann vorzugsweise auch in einer Wallet auf einer Cloud gespeichert werden. Ebenso ist es denkbar, dass das Zertifikat auf einem externen Speichermedium gespeichert werden kann, beispielsweise auf einer SD-Karte oder auf einem USB-Stick.

Neben dem Zertifikat wird auch eine Antwort für den korrekten Empfang der Schriftstückfortsetzungsauswahl vom Rechensystem an die Abonnenten-Endgeräte gesendet. Diese Antwort dient lediglich der Bestätigung, dass die Übertragung der Schriftstückfortsetzungsauswahl erfolgreich erfolgt ist. Folglich ist die Antwort des Rechensystems nicht mit dem Zertifikat zu verwechseln.

Es kann jeweils eine Schriftstückfortsetzungsauswahl von einem Abonnenten-Endgerät empfangen werden. Es wird also eine Mehrzahl an Schriftstückfortsetzungsauswahlen vom Rechensystem empfangen und gespeichert. Anhand der Mehrzahl an Schriftstückfortsetzungsoptionen generiert die Auswerteeinheit eine Schriftstückfortsetzungsentscheidung aus den ausgewählten Schriftstückfortsetzungsauswahlen. Diese Entscheidung legt fest, wie das Schriftstück durch den Autor fortgeschrieben werden soll. Die Schriftstückfortsetzungsentscheidung wird an das Autor-Endgerät gesendet, um den Autor über die Entscheidung zu informieren.

Infolgedessen kann der Autor eine Fortsetzung für den Schriftstückabschnitt basierend auf der Schriftstückfortsetzungsentscheidung treffen. Diese Fortsetzung kann wiederum ein neuer Schriftstückabschnitt sein, zu dem der Autor wiederum neue Schriftstückfortsetzungsoptionen definieren kann. Die beschriebenen Schritte werden insbesondere so lange durchgeführt, bis ein Schriftstück zu Ende entwickelt wurde.

Der Vorteil eines solchen Rechensystems ist es, dass der Autor mittels des Autor-Endgerätes mit Abonnenten mittels der jeweiligen Abonnenten-Endgeräte über die digitale Kooperationsschnittstelle, die durch das Rechenzentrum bereitgestellt wird, bereits während der Entwicklung des Schriftstückes im Austausch ist. Der Autor profitiert dabei, indem ihm eine unkomplizierte Plattform zur Verfügung gestellt wird, auf der er in Abschnitten Schriftstücke publizieren und bereits während der Entwicklung des Schriftstückes Interesse wecken kann. Die Abonnenten profitieren von der Erfindung vorteilhaft dadurch, dass diese die Möglichkeit bekommen, an einem Schriftstück mitzuwirken. Zweitens enthalten die Abonnenten für jede Mitwirkung ein Zertifikat. Diese Zertifikate können für Sammler einen Wert entwickeln, wobei die Zertifikate auch entsprechend zu ihrem Wert gehandelt werden können.

Gemäß einer bevorzugten Ausführungsform veranlasst der zumindest eine Prozessor die Auswerteeinheit dazu, die ausgewählten und empfangenen Schriftstückfortsetzungsauswahlen jeweils zu einer Summe je Schriftstückfortsetzungsoption aufzuaddieren und basierend auf einem Vergleich der jeweiligen Summen die Schriftstückfortsetzungsentscheidung zu treffen.

Vorzugsweise wird sich für diejenige Schriftstückfortsetzungsoption entschieden, bei der die Summe an empfangenen Schriftstückfortsetzungsauswahlen, die von den Abonnenten-Endgeräten empfangen wurden, am größten ist. Dementsprechend wird die Schriftstückfortsetzungsentscheidung mit einer einfachen Mehrheit entschieden.

Alternativ bevorzugt werden in einem Zwischenschritt die beiden Schriftstückfortsetzungsoptionen mit den größten Summen an ausgewählten Schriftstückfortsetzungsauswahlen ausgewählt und erneut an die Abonnenten-Endgeräte gesendet. An den Abonnenten-Endgeräten kann dann eine Schriftstückfortsetzungsauswahl zwischen den beiden Optionen getroffen werden. Dementsprechend wird die Schriftstückfortsetzungsentscheidung mit einer absoluten Mehrheit entschieden.

Gemäß einer bevorzugten Ausführungsform umfasst das Rechensystem eine Prüfeinheit basierend auf einem neuronalen Netz. Bevorzugt veranlasst der zumindest eine Prozessor die Prüfeinheit dazu, einen empfangenen Schriftstückabschnitt in Hinblick auf vorgebbare Richtlinien zu prüfen.

Die Prüfeinheit ist vorzugsweise so trainiert, dass der Inhalt eines Schriftstückabschnittes in Form von Wörtern, Sätzen, Passagen, Bildern oder dergleichen hinsichtlich der Richtlinien geprüft wird. Schriftstückabschnitte, die in Folge der Prüfung den Richtlinien nicht entsprechen, werden somit vorteilhaft herausgefiltert. Die herausgefilterten Schriftstückabschnitte und die entsprechenden Optionen werden folglich nicht an die Abonnenten-Endgeräte gesendet. Vorzugsweise wird eine entsprechende Benachrichtigung an das Autor-Endgerät gesendet, dass der Schriftstückabschnitt nicht den Richtlinien entspricht und nicht an die Abonnenten-Endgeräte gesendet wird.

Gemäß einer bevorzugten Ausführungsform ist das Rechensystem ein verteiltes Rechensystem. Dies hat den Vorteil, dass mehrere Prozesse gleichzeitig ausgeführt und Redundanzen geschaffen werden können. Zudem hat ein verteiltes Rechensystem den Vorteil, dass es besser skalierbar ist.

Gemäß einer bevorzugten Ausführungsform ist jeweils eine Bewertung des Schriftstückabschnitts von den Abonnenten-Endgeräten durch das Rechensystem empfangbar und an das Autor-Endgerät sendbar. Dies hat den Vorteil, dass der Autor eine zusätzliche Kommunikationsmöglichkeit mit Abonnenten während der Entwicklung eines Schriftstückes hat, ebenso wie die die Abonnenten mit dem Autor.

Gemäß einer bevorzugten Ausführungsform ist zumindest eine Schriftstückfortsetzungsalternative von zumindest einer der Abonnenten-Endgeräte durch das Rechensystem, initiiert durch eine Eingabe des Abonnenten in das Abonnenten-Endgerät, empfangbar. Die Schriftstückfortsetzungsalternative ist dann mittels des Rechensystems an das Autor-Endgerät sendbar ist. Somit ist es für einen Abonnenten nicht nur möglich, eine Option des Autors auszuwählen, sondern selbst eine Alternative für die Fortsetzung des Schriftstückes anzubieten. Dies hat den Vorteil, dass die Kooperation zwischen Autor und Abonnenten weiter gefördert werden kann.

Gemäß einer bevorzugten Ausführungsform ist eine Freigabe für zumindest eine der zumindest einen Schriftstückfortsetzungsalternative von dem Autor-Endgerät, initiiert durch eine Eingabe des Autors in das Autor-Endgerät, durch das Rechensystem empfangbar. Dadurch wird verhindert, dass Alternativen, die von einem Abonnenten aufgezeigt wurden und die dem Autor nicht zusagen, als weitere Schriftstückfortsetzungsoption an die Abonnenten-Endgerät gesendet werden. Ebenso wird somit eine unkontrollierte Anzahl an Optionen verhindert. Sollte der Autor mit einer einem Vorschlag für eine Schriftstückfortsetzungsalternative einverstanden sein und freigeben, ist diese Alternative als weitere Schriftstückfortsetzungsoption an die Abonnenten-Endgeräte sendbar.

Des Weiteren wird zur Lösung der Aufgabe ein computerimplementiertes Verfahren gemäß Anspruch 8 beansprucht. Das Verfahren kann dabei mit allen bereits obig im Rahmen des Rechensystems beschriebenen Merkmalen einzeln oder in Kombination miteinander ausgestattet sein und umgekehrt.

Gemäß einer bevorzugten Ausführungsform werden Netzwerkprotokolle für das Senden und Empfangen genutzt. Bevorzugt handelt es sich um Netzwerkprotokolle aus der Gruppe TCP/IP. Es ist jedoch auch denkbar, dass andere Netzwerkprotokollgruppen verwendet werden. Vorzugsweise wird der Schriftstückabschnitt und die Mehrzahl an Schriftstückfortsetzungsoptionen vom Autor-Endgerät an das Rechensystem mittels Netzwerkprotokollen übertragen, ebenso wie der Schriftstückabschnitt und die Mehrzahl an Schriftstückfortsetzungsoptionen vom Rechensystem an die Abonnenten-Endgeräte. Weiter wird die Schriftstückfortsetzungsauswahl von den Abonnenten-Endgeräten mittels Netzwerkprotokollen an das Rechensystem übertragen, sowie eine Schriftstückfortsetzungsentscheidung vom Rechensystem an das Autor-Endgerät. Weiter werden auch Schriftstückfortsetzungsalternativen und Freigaben mittels Netzwerkprotokollen übertragen. Es ist auch vorstellbar, dass das Zertifikat mittels Netzwerkprotokollen vom Rechensystem an die Abonnenten-Endgeräte übertragen wird.

Gemäß einer bevorzugten Ausführungsform ist ein Zeitraum für den Empfang der ausgewählten Schriftstückfortsetzungsauswahlen begrenzbar. Bevorzugt ist der Zeitraum begrenzt auf eine Woche, weiter bevorzugt auf 3 Tage oder alternativ bevorzugt auf 24 Stunden. Besonders bevorzugt kann ein Autor den Zeitraum nach seiner Wahl begrenzen. Vorzugsweise können innerhalb des Zeitraums auch Schriftstückfortsetzungsalternativen durch das Rechensystem empfangen werden. Weiter ist es vorstellbar, dass in einem ersten Zeitraum Schriftstückfortsetzungsauswahlen und -alternativen empfangbar sind, und in einem zeitlich nachfolgenden, zweiten Zeitraum Schriftstückfortsetzungsauswahlen ausgewählt aus den Schriftstückfortsetzungsoptionen des Autors und die vom Autor freigegebenen Schriftstückfortsetzungsoptionen der Abonnenten empfangbar sind. Vorzugsweise sind in einem zeitlich dem zweiten Zeitraum nachfolgenden, dritten Zeitraum eine Schriftstückfortsetzungs-auswahl, ausgewählt aus zwei Schriftstückfortsetzungsoptionen, die innerhalb des zweiten Zeitraums am meisten ausgewählt wurden, empfangbar.

Gemäß einer bevorzugten Ausführungsform enthält das Zertifikat zumindest Informationen über den Autor, das Schriftstück und den Schriftstückabschnitt. Dies hat den Vorteil, dass einem Zertifikat auch eine Schriftstückauswahl zu einem Schriftstückabschnittes eines Schriftstückes eines Autors genau zugewiesen bzw. zuordenbar ist. Insbesondere sind mehrere Zertifikate in der Anzahl zu einem Schriftstückabschnitt eines Schriftstückes eines Autors vorhanden, wie Schriftstückfortsetzungsauswahlen vom Rechensystem empfangen wurden. Diese Zertifikate, die dieselben Informationen über den Autor, das Schriftstück und den Schriftstückabschnitt beinhalten, sind bevorzugt nicht voneinander unterscheidbar. Jedoch sind Zertifikate vorzugsweise unterscheidbar durch die beinhaltenten, unterschiedlichen Informationen über den jeweiligen Autor und/oder das jeweilige Schriftstück und/oder den jeweiligen Schriftstückabschnitt.

Gemäß einer bevorzugten Ausführungsform ist das Zertifikat eine nicht ersetzbare, digital geschützte Wertmarke basierend auf der Blockchain-Technologie, insbesondere ein sogenannter NFT (Non-Fungible Token). Die Blockchain-Technologie in Bezug auf NFTs hat den Vorteil, dass digitale Dateien, beispielsweise virtuelle Güter, digitale Kunst oder, wie in der vorliegenden Erfindung, Zertifikate für den Empfang einer ausgewählten Schriftstückfortsetzungsauswahl, als Einzelstücke kennzeichenbar sind. Insbesondere können derartige Einzelstücke einen Sammlerwert haben, beispielsweise indem ein Autor an Bekanntheit gewinnt oder ein Schriftstück erfolgreich ist. Die Zertifikate in Form eines NFTs können auf einer Handelsplattform innerhalb eines Blockchain-Projektes, vorzugsweise in einer Kryptowährung, gehandelt werden. Eine Transaktion eines NFTs wird insbesondere in der Blockchain des NFTs verbucht, sodass ein Eigentümer des NFTs eindeutig festgelegt ist.

Gemäß einer bevorzugten Ausführungsform ist das Schriftstück ausgewählt aus einer Gruppe umfassend Bücher, insbesondere Romane und Drehbücher, Geschichten, Novellen, Bildergeschichten oder Fotostories.

Des Weiteren wird zur Lösung der Aufgabe ein Computerprogramm gemäß Anspruch 14 und ein computerlesbares Speichermedium gemäß Anspruch 15 beansprucht. Das Computerprogramm und das computerlesbare Speichermedium können dabei mit allen bereits obig im Rahmen des Rechensystems und des Verfahrens beschriebenen Merkmalen einzeln oder in Kombination miteinander ausgestattet sein und umgekehrt.

Weitere Ziele, Vorteile und Zweckmäßigkeiten der vorliegenden Erfindung sind anhand anliegender Zeichnungen und nachfolgender Beschreibung erläutert.

Hierbei zeigen:
- Fig. 1a-1d, 2a-2b: ein Diagramm eines Rechensystems einer bevorzugten Ausführungsform, das mit einem Autor-Endgerät und Abonnenten-Endgeräten verbunden ist;
- Fig. 3: ein Flussdiagramm eines computerimplementierten Verfahrens gemäß einer bevorzugten Ausführungsform.

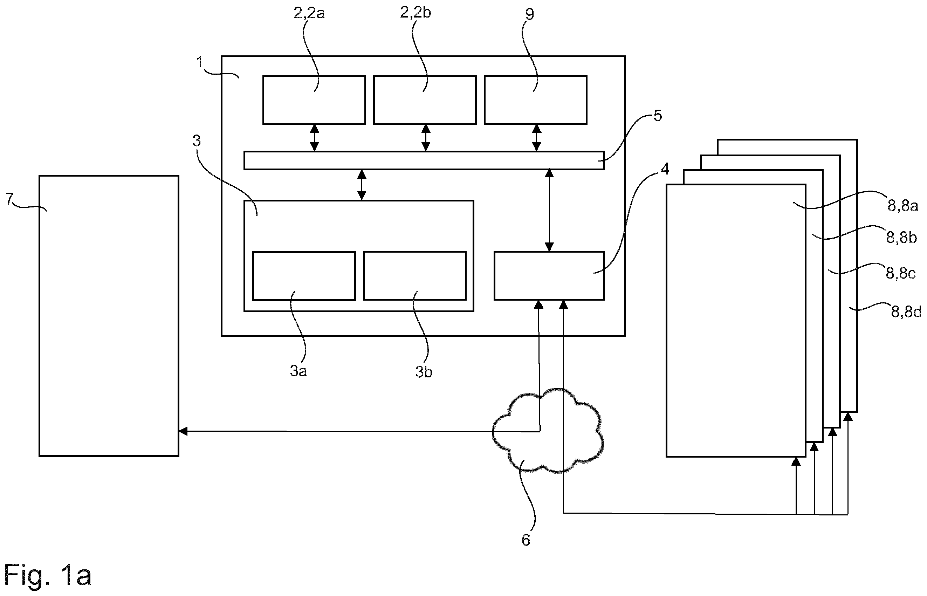

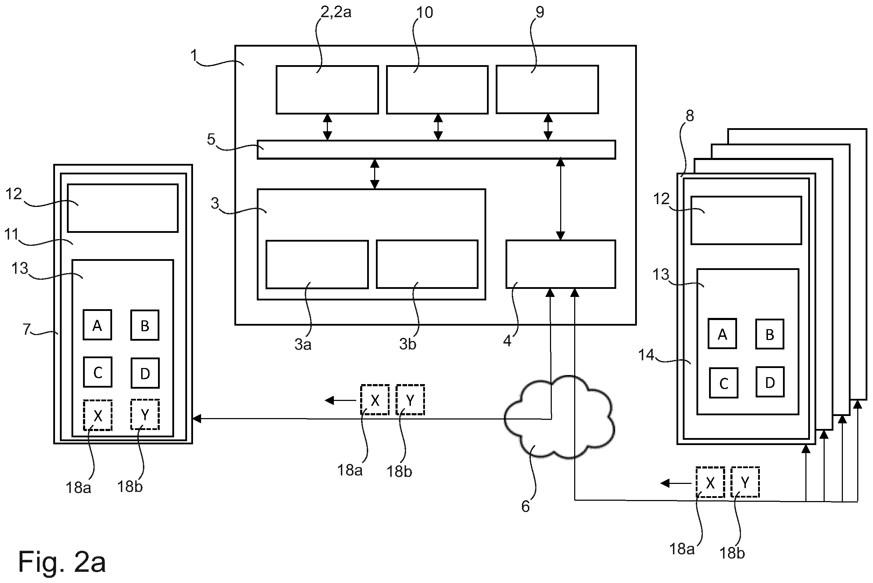

Die Figuren 1a-1d und 2a-2b zeigen jeweils ein Diagramm eines Rechensystems 1 einer bevorzugten Ausführungsform, das mit einem Autor-Endgerät 7 und Abonnenten-Endgeräten 8, 8a, 8b, 8c, 8d verbunden ist. Diese Verbindungen sind insbesondere jeweils eine Zweiwege-Verbindung, die jeweils durch einen Doppelpfeil zwischen einer Netzwerkschnittstelle 4 des Rechensystems 1 und dem Autor-Endgerät 7 bzw. zwischen der Netzwerkschnittstelle 4 und jeweils den Abonnenten-Endgeräten dargestellt ist. Ein Netzwerk 6, vorzugsweise das Internet, verbindet das Rechensystem 1 mit den Endgeräten 7, 8.

Das Rechensystem 1 umfasst grundsätzlich zumindest einen Prozessor 2, 2a, 2b, ein Speichermedium 3, eine Auswerteeinheit 9, die ein Prozessor oder Teil eines Prozessors sein kann, und die Netzwerkschnittstelle 4, die jeweils mit einem I/O-Interface (Ein-/Ausgabe-Schnittstelle) 5 des Rechensystems 1 signaltechnisch verbunden sind. Das I/O-Interface 5 stellt somit die wechselseitige, interne Kommunikation innerhalb des Rechensystems 1 sicher. Das Rechensystem 1 kann über weitere Komponenten verfügen, die für den Betrieb des Rechensystems 1 erforderlich sind.

Bevorzugt verfügt das Speichermedium 3 über einen Programmspeicher 3a und einen Datenspeicher 3b. Im Programmspeicher 3a sind insbesondere prozessorausführbare Befehle, insbesondere eines computerimplementierten Verfahrens, gespeichert. Ruft ein Prozessor 2 über das I/O-Interface 5 die Befehle ab, führt er diese aus und veranlasst, dass der Prozessor 2 die Schritte des computerimplementierten Verfahrens ausführt.

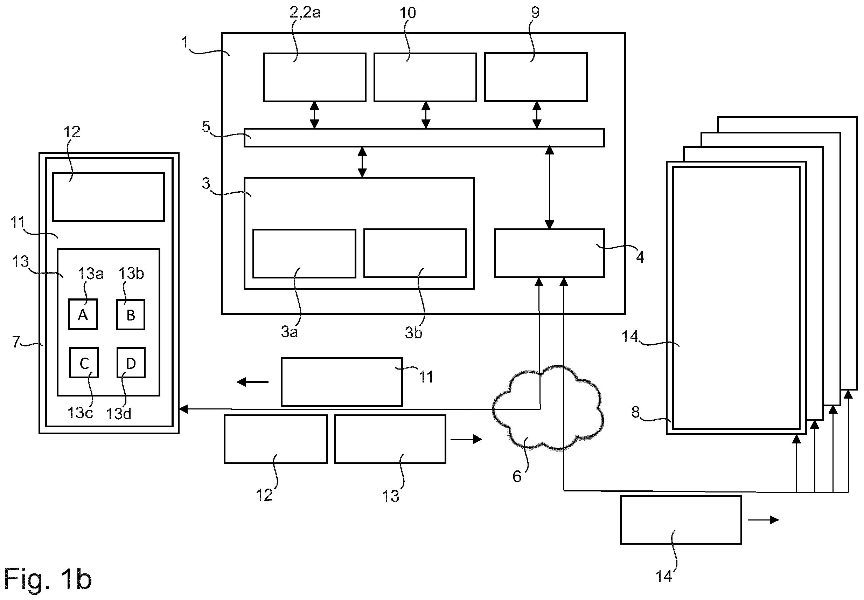

Die Schritte des computerimplementierten Verfahrens werden im Folgenden anhand der Figuren 1b-1d näher erläutert.

In einem ersten Schritt stellt das Rechensystem 1 dem Autor-Endgerät 7 eine Autor-Benutzeroberfläche 11, sowie den Abonnenten-Endgeräten 8 jeweils eine Abonnenten-Benutzeroberfläche 14 bereit. Dieser Schritt kann dadurch initiiert werden, indem ein Autor bzw. ein Abonnent mittels des Endgerätes eine entsprechende, frei zugängliche Webseite oder App bzw. ein Computerprogramm aufruft und Login-Daten an das Rechensystem 1 sendet.

In der Autor-Benutzeroberfläche 11, die auf dem Autor-Endgerät 7 darstellbar ist, kann der Autor ein Schriftstückabschnitt 12 und eine Mehrzahl, hier gezeigt vier Schriftstückfortsetzungsoptionen 13, 13a, 13b, 13c, 13d, beispielsweise durch einen Upload oder durch Eingabe in einem Eingabefenster der Autor-Benutzeroberfläche 11, zur Verfügung stellen.
Der Schriftstückabschnitt 12 und die Mehrzahl an Schriftstückfortsetzungsoptionen 13 werden nachfolgend vom Rechensystem 1 empfangen. Insbesondere führt der Prozessor 2 aus, dass der Schriftstückabschnitt 12 und die Mehrzahl an Schriftstückfortsetzungsoptionen 13 über die Netzwerkschnittstelle 4 empfangen und von zumindest einem Prozessor 2 weiterverarbeitet werden. Anschließend werden der Schriftstückabschnitt 12 und die Mehrzahl an Schriftstückfortsetzungsoptionen 13 im Datenspeicher 3b gespeichert.

Vorzugsweise werden der empfangene und gespeicherte Schriftstückabschnitt 12 sowie die Mehrzahl an Schriftstückfortsetzungsoptionen 13 mittels einer Prüfeinheit 10 hinsichtlich vorgebbarer Richtlinien geprüft, wobei die Prüfeinheit 10 auf einem neuronalen Netz basiert.

Der vorzugsweise geprüfte Schriftstückabschnitt 12 sowie die Mehrzahl an Schriftstückfortsetzungsoptionen 13 werden anschließend jeweils an die Abonnenten-Endgeräte 8 gesendet, sodass diese in der Abonnenten-Benutzeroberfläche 14 von den Abonnenten gelesen werden können. Weiter werden jeweils die Abonnenten innerhalb eines definierbaren Zeitraumes über die Abonnenten-Benutzeroberfläche 14 dazu aufgefordert, eine Schriftstückfortsetzungsauswahl 15 aus den Schriftstückfortsetzungsoptionen 13 auszuwählen. Insbesondere trifft jeder einzelne Abonnent unabhängig seine eigene Auswahl.

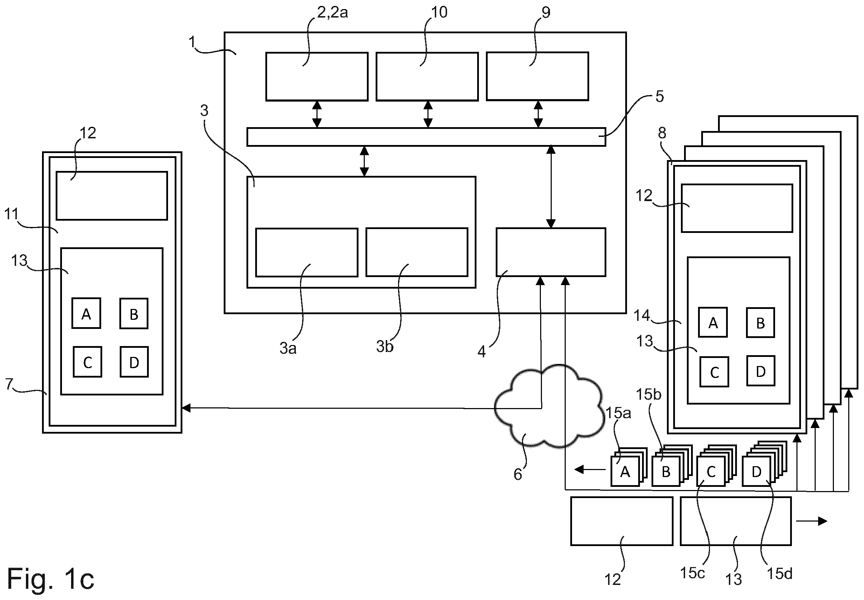

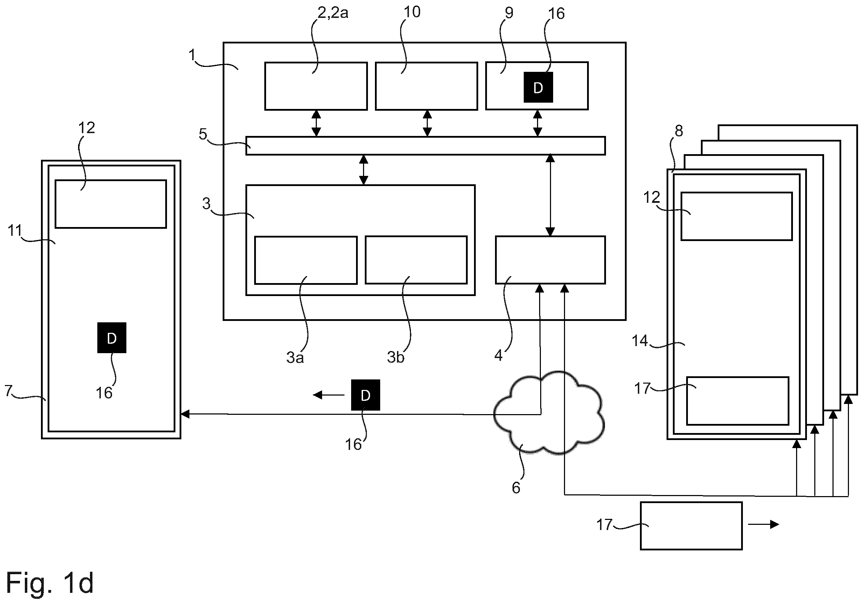

Alle Schriftstückfortsetzungsauswahlen 15, 15a, 15b, 15c, 15d werden, initiiert durch die jeweilige Auswahl eines Abonnenten in der Abonnenten-Benutzeroberfläche 11, vom Rechensystem 1 empfangen und von der Auswerteeinheit 9 weiterverarbeitet. Wie in der Figur 1c dargestellt ist, hat sich eine relative Mehrheit der Abonnenten für die Option D entschieden. Gemäß dieser relativen Mehrheit generiert die Auswerteeinheit 10 eine Schriftstückfortsetzungsentscheidung 16, wie in der Figur 1d gezeigt ist. Die Schriftstückfortsetzungsentscheidung wird daraufhin an das Autor-Empfangsgerät 16 gesendet und in der Autor-Benutzeroberfläche 11 dargestellt. Entsprechend dieser Entscheidung ist der Autor dazu aufgefordert, innerhalb eines definierbaren Zeitraumes eine Fortsetzung für den bisherigen Schriftstückabschnitt 12 anzufertigen.

Die beschriebenen Schritte sind in der Entwicklung eines Schriftstückes mehrmals wiederholbar. Insbesondere wird ein Schriftstückabschnitt durch einen weiteren, darauf aufbauenden Schriftstückabschnitt gemäß der Schriftstückfortsetzungsentscheidung 16 ergänzt, der wiederum einen neuen Schriftstückabschnitt mit einer Mehrzahl an möglichen Schriftstückfortsetzungsoptionen 13 darstellt.

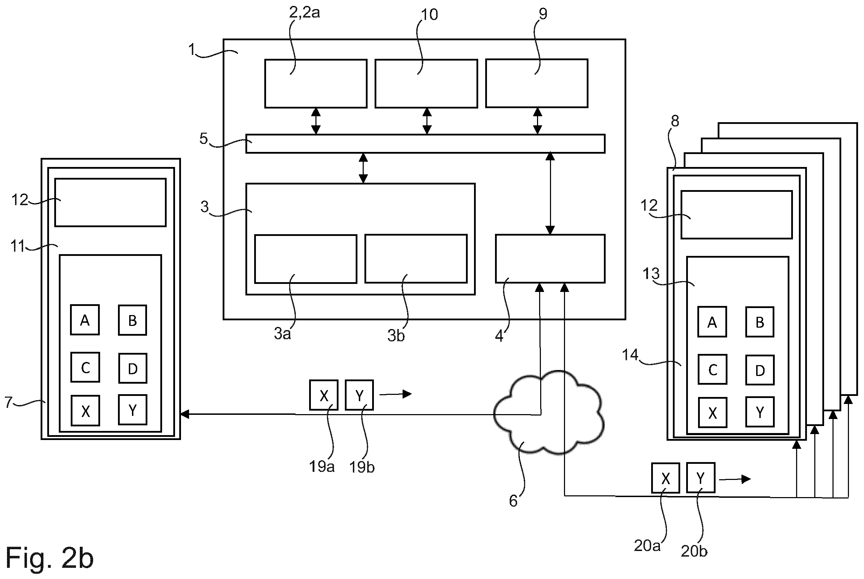

Die Figuren 2a und 2b zeigen eine mögliche, zusätzliche Ausführungsform der Schritte des computerimplementierten Verfahrens. Insbesondere ist es vorstellbar, dass auf den Abonnenten-Benutzeroberflächen 14 neben dem Schriftstückabschnitt 12 und den Schriftstückfortsetzungsoptionen 13 ein Eingabefeld zur Verfügung steht, in das jeweils ein Abonnent eine Alternative 18, 18a, 18b neben den Schriftstückfortsetzungsoptionen 13 eingeben kann. Die Schriftstückfortsetzungsalternativen 18, 18a, 18b werden durch das Rechensystem 1 empfangen, bevorzugt durch die Prüfeinheit 10 hinsichtlich der vorgebbaren Richtlinien geprüft, und an das Autor-Endgerät 7 gesendet. Die Schriftstückfortsetzungsalternativen 18, 18, 18b, die in der Autor-Benutzeroberfläche 11 darstellbar sind, können vom Autor bewertet werden. Sollte der Autor eine oder mehrere der Schriftstückfortsetzungsalternativen 18 akzeptieren, kann er eine entsprechende Eingabe in der Autor-Benutzeroberfläche 11 tätigen. Eine oder mehrere Freigaben 19, 19a, 19b des Autors sind durch das Rechensystem 1 empfangbar und als zusätzliche Schriftstückfortsetzungsoptionen 20, 20a, 20b an die Abonnenten-Endgeräte 8 sendbar, wobei eine Schriftstückfortsetzungsoption 20 einer von einem Abonnenten vorgeschlagenen und vom Autor freigegeben Schriftstückfortsetzungsalternative 18 entspricht.

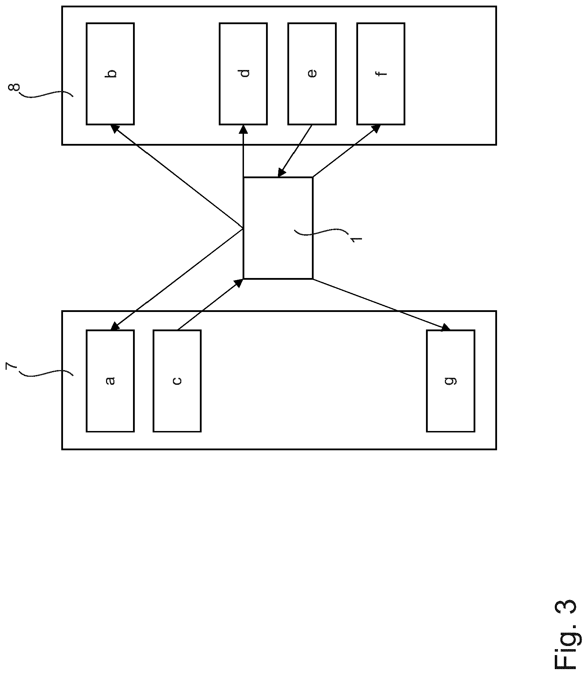

Die Figur 3 zeigt ein Flussdiagramm eines computerimplementierten Verfahrens gemäß einer bevorzugten Ausführungsform. Im Schritt a wird dem Autor-Endgerät 7 die Autor-Benutzeroberfläche 11 vom Rechensystem 1 bereitgestellt. Im Schritt b wird dem Abonnenten-Endgerät 8 die Abonnenten-Benutzeroberfläche 14 vom Rechensystem 1 bereitgestellt. Diese Dienste sind gemäß Schritt a und b im Wesentlichen durchgehend bereitstellbar. Im Schritt c wird der Schriftstückabschnitt 12 und eine Mehrzahl an Schriftstückfortsetzungsoptionen 13, 13a, 13b, 13c, 13d ausgehend von dem Autor-Endgerät 7 durch das Rechensystem 1 empfangen und im Speichermedium 3 gespeichert. Im Schritt d wird der Schriftstückabschnitt 12 und die Mehrzahl an Schriftstückfortsetzungsoptionen 13 vom Rechensystem 1 an das Abonnenten-Endgerät 8 gesendet. Im Schritt e wird jeweils eine Schriftstückfortsetzungsauswahl 15, 15a, 15b, 15c, 15d, ausgewählt aus der Mehrzahl an Schriftstückfortsetzungsoptionen 13, 13a, 13b, 13c, 13d, von den Abonnenten-Endgeräten 8, 8a, 8b, 8c, 8d durch das Rechensystem 1 empfangen. Im Schritt f wird jeweils ein Zertifikat 17 für den Empfang der jeweils ausgewählten Schriftstückfortsetzungsauswahl 15, 15a, 15b, 15c, 15d erzeugt und das jeweilige Zertifikat 17 vom Rechensystem 1 an das jeweilige Abonnenten-Endgerät 8, 8a, 8b, 8c, 8d gesendet. Im Schritt g wird eine Schriftstückfortsetzungsentscheidung 16 aus den empfangenen Schriftstückfortsetzungsauswahlen 15, 15a, 15b, 15c, 15d mittels der Auswerteeinheit 9 des Rechensystems 1 generiert und die Schriftstückfortsetzungsentscheidung 16 an das Autor-Endgerät 7 gesendet.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Rechensystem
- 2, 2a, 2b: Prozessor
- 3: Speichermedium
- 3a: Programmspeicher
- 3b: Datenspeicher
- 4: Netzwerkschnittstelle
- 5: I/O Interface
- 6: Netzwerk
- 7: Autor-Endgerät
- 8, 8a, 8b, 8c, 8d: Abonnenten-Endgeräte
- 9: Auswerteeinheit
- 10: Prüfeinheit
- 11: Autor-Benutzeroberfläche
- 12: Schriftstückabschnitt
- 13, 13a, 13b, 13c, 13d: Schriftstückfortsetzungsoptionen
- 14: Abonnenten-Benutzeroberfläche
- 15, 15a, 15b, 15c, 15d: Schriftstückfortsetzungsauswahlen
- 16: Schriftstückfortsetzungsentscheidung
- 17: Zertifikat
- 18, 18a, 18b: Schriftstückfortsetzungsalternativen
- 19, 19a, 19b: Freigabe
- 20, 20a, 20b: zusätzliche Schriftstückfortsetzungsoptionen

## Patentansprüche

1. Rechensystem (1) zur Bereitstellung einer digitalen Kooperationsschnittstelle zwischen einem Autor und Abonnenten des Autors zur Entwicklung eines Schriftstückes, das Rechensystem (1) umfassend zumindest eine Netzwerkschnittstelle (4), eine Auswerteeinheit (9) und ein Speichermedium (3), das mit zumindest einem Prozessor (2, 2a, 2b) gekoppelt ist und prozessorausführbare Befehle speichert, die bei Ausführung durch den zumindest einen Prozessor (2, 2a, 2b) den zumindest einen Prozessor (2, 2a, 2b) zumindest zu den folgenden Schritten veranlasst:
a. Bereitstellen einer Autor-Benutzeroberfläche (11) auf einem Autor-Endgerät (7), das über ein Netzwerk (6) mit der Netzwerkschnittstelle (4) verbunden ist;
b. Bereitstellen jeweils einer Abonnenten-Benutzeroberfläche (14) auf Abonnenten-Endgeräten (8, 8a, 8b, 8c, 8d), die über das Netzwerk (6) mit der Netzwerkschnittstelle (4) verbunden sind;
c. Empfangen eines Schriftstückabschnittes (12) und einer Mehrzahl an Schriftstückfortsetzungsoptionen (13, 13a, 13b, 13c, 13d) von dem Autor-Endgerät (7) und Speichern in dem Speichermedium (3);
d. Senden des Schriftstückabschnittes (12) und der Mehrzahl an Schriftstückfortsetzungsoptionen (13) an die Abonnenten-Endgeräte (8, 8a, 8b, 8c, 8d);
e. Empfangen jeweils einer Schriftstückfortsetzungsauswahl (15, 15a, 15b, 15c, 15d) ausgewählt aus der Mehrzahl an Schriftstückfortsetzungsoptionen (13, 13a, 13b, 13c, 13d) von den Abonnenten-Endgeräten (8, 8a, 8b, 8c, 8d);
f. Erzeugen jeweils eines Zertifikates (17) für den Empfang der jeweils ausgewählten Schriftstückfortsetzungsauswahl (15, 15a, 15b, 15c, 15d) und Senden des jeweiligen Zertifikates (17) an das jeweilige Abonnenten-Endgerät (8, 8a, 8b, 8c, 8d);
g. Generieren einer Schriftstückfortsetzungsentscheidung (16) aus den empfangenen Schriftstückfortsetzungsauswahlen (15, 15a, 15b, 15c, 15d) mittels der Auswerteeinheit (9) und Senden der Schriftstückfortsetzungsentscheidung (16) an das Autor-Endgerät (7).

2. Rechensystem (1) nach Anspruch 1,
**dadurch gekennzeichnet, dass**
der zumindest ein Prozessor die Auswerteeinheit dazu veranlasst, die ausgewählten und empfangenen Schriftstückfortsetzungsauswahl jeweils zu einer Summe je Schriftstückfortsetzungsoption aufzuaddieren und basierend auf einem Vergleich der jeweiligen Summen die Schriftstückfortsetzungsentscheidung zu treffen.

3. Rechensystem (1) nach Anspruch 1 oder 2,
**dadurch gekennzeichnet, dass**
das Rechensystem (1) eine Prüfeinheit (10) basierend auf einem neuronalen Netz umfasst, wobei der zumindest ein Prozessor (2, 2a, 2b) die Prüfeinheit (10) dazu veranlasst, einen empfangenen Schriftstückabschnitt (12) in Hinblick auf vorgebbare Richtlinien zu prüfen.

4. Rechensystem (1) nach einem der vorherigen Ansprüche,
**dadurch gekennzeichnet, dass**
das Rechensystem (1) ein verteiltes Rechensystem ist.

5. Rechensystem (1) nach einem der vorherigen Ansprüche,
**dadurch gekennzeichnet, dass**
jeweils eine Bewertung des Schriftstückabschnitts (12) von den Abonnenten-Endgeräten (8, 8a, 8b, 8c, 8d) durch das Rechensystem (1) empfangbar und an das Autor-Endgerät (7) sendbar ist.

6. Rechensystem (1) nach einem der vorherigen Ansprüche,
**dadurch gekennzeichnet, dass**
zumindest eine Schriftstückfortsetzungsalternative (18, 18a, 18b) von zumindest einer der Abonnenten-Endgeräte (8, 8a, 8b, 8c, 8d) durch das Rechensystem (1) empfangbar und an das Autor-Endgerät (7) sendbar ist.

7. Rechensystem (1) nach Anspruch 6,
**dadurch gekennzeichnet, dass**
eine Freigabe (19, 19a, 19b) für zumindest eine der zumindest einen Schriftstückfortsetzungsalternative (18, 18a, 18b) von dem Autor-Endgerät (7) durch das Rechensystem (1) empfangbar und als zusätzliche Schriftstückfortsetzungsoption (20, 20a, 20b) an die Abonnenten-Endgeräte sendbar ist.

8. Computerimplementiertes Verfahren zur Bereitstellung einer digitalen Kooperationsschnittstelle zwischen einem Autor und Abonnenten des Autors zur Entwicklung eines Schriftstückes, umfassend die Schritte:
a. Bereitstellen einer Autor-Benutzeroberfläche (11) auf einem Autor-Endgerät (7);
b. Bereitstellen jeweils einer Abonnenten-Benutzeroberfläche (14) auf Abonnenten-Endgeräten (8, 8a, 8b, 8c, 8d);
c. Empfangen und Speichern eines Schriftstückabschnittes (12) und einer Mehrzahl an Schriftstückfortsetzungsoptionen (13, 13a, 13b, 13c, 13d) von dem Autor-Endgerät (7);
d. Senden des Schriftstückabschnittes (12) und der Mehrzahl an Schriftstückfortsetzungsoptionen (13) an die Abonnenten-Endgeräte (8, 8a, 8b, 8c, 8d);
e. Empfangen jeweils einer Schriftstückfortsetzungsauswahl (15, 15a, 15b, 15c, 15d) ausgewählt aus der Mehrzahl an Schriftstückfortsetzungsoptionen (13, 13a, 13b, 13c, 13d) von den Abonnenten-Endgeräten (8, 8a, 8b, 8c, 8d);
f. Erzeugen jeweils eines Zertifikates (17) für den Empfang der jeweils ausgewählten Schriftstückfortsetzungsauswahl (15, 15a, 15b, 15c, 15d) und Senden des jeweiligen Zertifikates (17) an das jeweilige Abonnenten-Endgerät (8, 8a, 8b, 8c, 8d);
g. Generieren einer Schriftstückfortsetzungsentscheidung (16) aus den empfangenen Schriftstückfortsetzungsauswahlen (15, 15a, 15b, 15c, 15d) und Senden der Schriftstückfortsetzungsentscheidung (16) an das Autor-Endgerät (7).

9. Computerimplementiertes Verfahren nach Anspruch 8,
**dadurch gekennzeichnet, dass**
Netzwerkprotokolle für das Senden und Empfangen genutzt werden.

10. Computerimplementiertes Verfahren nach Anspruch 8 oder 9,
**dadurch gekennzeichnet, dass**
ein Zeitraum für den Empfang der ausgewählten Schriftstückfortsetzungsauswahlen (15, 15a, 15b, 15c, 15d) begrenzbar ist.

11. Computerimplementiertes Verfahren nach einem der Ansprüche 8-10,
**dadurch gekennzeichnet, dass**
das Zertifikat (17) zumindest Informationen enthält über den Autor, das Schriftstück und den Schriftstückabschnitt.

12. Computerimplementiertes Verfahren nach einem der Ansprüche 8 - 11,
**dadurch gekennzeichnet, dass**
das Zertifikat (17) eine nicht ersetzbare, digital geschützte Wertmarke basierend auf der Blockchain-Technologie ist, insbesondere ein Non-Fungible Token.

13. Computerimplementiertes Verfahren nach einem der vorherigen Ansprüche,
**dadurch gekennzeichnet, dass**
das Schriftstück ausgewählt ist aus einer Gruppe umfassend Bücher, insbesondere Romane und Drehbücher, Geschichten, Novellen, Bildergeschichten oder Fotostories.

14. Computerprogramm zur Bereitstellung einer digitalen Kooperationsschnittstelle zwischen einem Autor und Abonnenten des Autors zur Entwicklung eines Schriftstückes, umfassend Befehle, die bei der Ausführung des Programms durch einen Computer diesen veranlassen, die Schritte des Verfahrens nach Anspruch 1 auszuführen.

15. Computerlesbares Speichermedium zur Bereitstellung einer digitalen Kooperationsschnittstelle zwischen einem Autor und Abonnenten des Autors zur Entwicklung eines Schriftstückes, umfassend Befehle, die bei der Ausführung durch einen Computer diesen veranlassen, die Schritte des Verfahrens nach Anspruch 1 auszuführen.
